(19) **Europäisches Patentamt / European Patent Office / Office européen des brevets**

(11) **EP 1 887 396 B1**

(12) **EUROPEAN PATENT SPECIFICATION**

(45) Date of publication and mention
of the grant of the patent:
**27.07.2011 Bulletin 2011/30**

(51) Int Cl.:
***G02B 6/44*** (2006.01)

(21) Application number: **07015345.7**

(22) Date of filing: **06.08.2007**

(54) **Optical fibre telecommunication cable**

Lichtwellenleiter-Telekommunikationskabel

Câble de télécommunications à fibre optique

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **08.08.2006 FR 0607219**

(43) Date of publication of application:
**13.02.2008 Bulletin 2008/07**

(73) Proprietor: **Draka Comteq B.V.**
**1083 HJ Amsterdam (NL)**

(72) Inventor: **Tatat, Olivier**
**62231 Sangatte (FR)**

(74) Representative: **Valkonet, Rutger et al**
**Algemeen Octrooi- en Merkenbureau**
**P.O. Box 645**
**5600 AP Eindhoven (NL)**

(56) References cited:
**EP-A- 0 968 809      EP-A- 1 006 385**
**EP-A- 1 343 040      WO-A-92/01962**
**US-A1- 2004 114 889**

**Description**

The present invention relates to the area of optical fibre telecommunications cables, and more particularly to cables with so-called micromodules in which the optical fibres are grouped to form a plurality of micromodules assembled together in a cable.

Optical fibre cables are known in particular from documents FR-A-2 665 266 and FR-A-2 706 218 comprising several micromodules of optical fibres, each optical fibre micromodule being enveloped by a retaining jacket enclosing several fibres.

The optical fibre telecommunications cables are generally intended to be laid in ducts of urban or long-haul transmission systems. To enable a cable being laid in a duct, it must have a certain robustness to withstand the traction and the mechanical stresses of laying, as well as a certain flexibility in at least one bending direction to enable its insertion in the system's ducts. In addition, a telecommunications cable must generally be able to withstand conditions of use over a large temperature range possibly extending from -40°C to +60°C, which may cause expansions and compressions in the cable jacket. It is therefore known to add strength members to the cable which absorb the mechanical stresses undergone by the cable and thereby protect the optical fibres arranged in the cable. Said strength members may be positioned in the central area of the cable or on its periphery. Documents WO-A-2006/034722 and WO-A-2006/034723 for example describe cables with micromodules having two circular strength members located longitudinally in the cable jacket surrounding the micromodules.

Document US 5,050,957 describes an optical fibre cable. The optical fibres are placed in a tubular element filled with a filler composition. A jacket surrounds the tubular element and strength members are arranged in the jacket against the tubular element. The cable described in this document is not a cable with micromodules. In one of the examples of this document, the strength members follow the outer periphery of the tubular element.

Documents US 5,109,457 and US 4,844,575 each describe an optical fibre cable comprising bundles of fibres assembled and placed in a tubular element filled with a filler composition. A jacket surrounds the tubular element and circular strength members are arranged in the jacket against the tubular element.

WO 92/01962 describes an optical fibre cable comprising at least one so-called package of optical fibre ribbons and at least one reinforcing member.

European patent application No. EP 0 968 809 relates to a composite reinforced buffer tube comprising an extruded elongated thermoplastic matrix having elongated, substantially continuous, reinforcement incorporated therein along its length between its inside and outside walls, wherein the reinforcement properties can be controlled by choosing the ratio of the cross-sectional area $A_r$ of the reinforcement to the cross-sectional area of the matrix $A_m$, the ratio $A_m$ to A, being in the range of about 5 to 1 to about 100 to 1.

U.S. patent application US 2004/0114889 relates to an optical ribbon fiber comprising:

a plurality of optical fibers aligned In a line;
a pair of strength members each arranged at a respective end of the line,
a ribbon coating layer coated onto outer surfaces of the optical fibers and the strength members so as to bond the optical fibers to the strength members,
wherein a size and a shape of the strength member is identical to those of at least one of said plurality of optical fibers.

The cables described in these documents are not cables with micromodules.

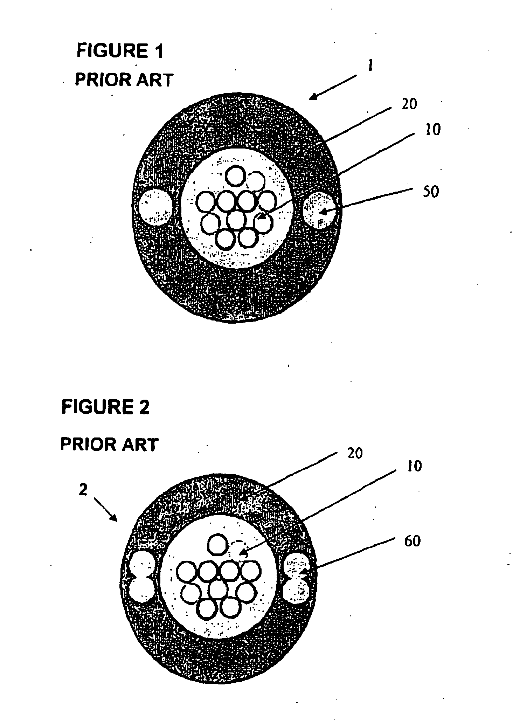

Figure 1 shows a diagram of a prior art cable including micromodules, of the type described in the above-cited documents WO-A-2006/034722 and WO-A-2006/034723.

In known manner, a telecommunications cable 1 with micromodules 10, each comprise a plurality of optical fibres grouped together. Although not illustrated in detail in Figure 1, each micromodule 10 contains several optical fibres enveloped together by a thin, flexible retaining jacket. A micromodule 10 may contain approximately 2 to 15 fibres. The retaining jackets of the micromodules 10 and the coatings of the optical fibres may be colored to facilitate the localization of fibres in the cable e.g. for splicing operations. The micromodules 10 are arranged in a central cavity of the cable 1. A jacket 20 surrounds the central cavity receiving the micromodules 10. The jacket 20 of cable 1 may be in polymer, generally polyethylene having a density in the range of preferably from 0.92 to 0.96 kg/m$^3$; it can be extruded in line during the formation of the cable as and when the fibres are grouped together in micromodules 10. The jacket 20 of cable 1 contains strength members 50 of a circular shape. The jacket 20 consists in fact of a material tight to humidity but mechanically less rigid and sensitive to temperature variations. The circular strength members 50 are therefore used to limit cable deformations due to pulling forces e.g. when laying the cable in a duct, and to limit axial contraction and expansion deformations of the cable when it is subjected to major temperature variations by offsetting jacket-induced compression or expansion forces.

As illustrated in Figure 1, the circular strength members 50 are generally arranged in the jacket 20 longitudinally, lying diametrically opposite either side of the cavity containing the micromodules 10. This arrangement of the strength members 50 makes it possible to define a preferential bending plane of the cable to allow its insertion in ducts of the telecommunications system for which it is intended.

The strength members 50 integrated in the thickness of the jacket 20 must not be positioned too near the micromodules 10 so as not to induce mechanical stresses in the micromodules 10 and optical fibres; and they must not be positioned too close to the outer periphery of the jacket 20 to avoid their damage and to guarantee a good coefficient of friction when laying the cable 1 in the ducts. It is generally considered that the strength members 50 must be positioned at least 0.3 mm and preferably 0.5 mm away from the outer periphery of the jacket 20. The size of the cable 1 therefore depends inter alia on the size of the strength members 50 which are integrated in the jacket 20. In addition, the thicker the jacket 20, the greater the expansion and compression forces due to temperature variations since the jacket material is particularly sensitive to temperature variations. It is therefore sought to limit the diameter of the strength members 50 used to reinforce the cable jacket 20 in order to limit the quantity of jacket 20 used, thereby reducing the diameter of the cable 1 and its manufacturing cost. But this limitation of the diameter of the strength elements 50 must not lead to faulty compensation of mechanical and heat stresses caused by compression and expansion due to temperature variations which the cable 1 may undergo when in use.

A robustness ratio of a cable can be defined as the ratio of the cross-section area of the strength elements over the cross-section area of the jacket. The higher this robustness ratio, the more the cable is able to withstand mechanical and heat stresses; but this ratio is limited however by the need to position the strength members distant from both the micromodules and the outer periphery of the cable, as explained above.

The SAGEM Company proposed replacing each strength member by two smaller, adjacent circular strength members. This solution is illustrated Figure 2 and was applied in a cable marketed by SAGEM under the trade name μGaine® cable. Each pair of circular strength members 60 in Figure 2 has substantially the same cross-section area as the larger strength member 50 in Figure 1, but with a smaller thickness of jacket 20 and hence a smaller diameter of the cable 2. Although this solution makes it possible to limit the quantity of jacket 20 used in the cable, the manufacturing cost of the cable 2 is not fully optimized since two strength members 60 of smaller diameter cost more than a single strength member 50 of larger diameter. In addition, it proves difficult to insert the material of the jacket 20 between the circular elements of a strength member pair 60 which may form a pathway for water finding its way between the two circular strength members 60 of a pair as far as a splicing box.

There is therefore a need for a cable which has a good robustness ratio with a reduced total diameter for a limited jacket thickness, and which has good water-blocking properties and reduced manufacturing cost.

For this purpose, the invention proposes using two strength members arranged longitudinally in the jacket and lying diametrically opposite on either side of the cable cavity containing the micromodules, these strength members being elongate in their cross-section to guarantee a large cross-section area for a lesser thickness.

More particularly the invention proposes an optical fibre telecommunication cable comprising:

- a longitudinal central cavity to receive micromodules grouping optical fibres together;
- a jacket surrounding the central cavity;
- two strength members arranged longitudinally in the jacket and defining a bending axis of the cable, which bending axis passes through the two strength members,
- each strength member having an elongated shape in its cross section with a height perpendicular to the bending axis and a width parallel to the bending axis, the height over width ratio of each strength member being strictly more than 1 and no more than 1.75.

The strength member according to the present invention possesses a non-circular shape, e.g. an oval shape, a race track shape, a rectangle bordered by two half-discs.

According to embodiments, the cable of the invention may comprise one or more of the following characteristics:

- the height over width ratio of each strength member lies between 1.5 and 1.75;
- each strength member is distant from the outer periphery of the jacket and from the inner periphery of the jacket by a distance of at least 0.3 mm;
- the strength members are made from a material or composite having an axial compression modulus of 40000 Mpa or more;
- the strength members (70) are made from a material or composite having a thermal expansion coefficient of $5.10^{-5}$ $K^{-1}$ or less;
- the central cavity is substantially circular;
- the cross section area (CSA) of each strength member is defined as:

$$CSA_{sm} = L \, x \, (H - L) + \frac{\pi}{4}(L^2)$$

- the cross section area (CSA) of the jacket is defined by the following relation :

$$CSA_{jacket} = \frac{\pi}{4}(De^2 - D_i^2) - 2CSA_{sm}$$

- the robustness ratio is defined by the relation:

$$\frac{CSA_{sm}}{CSA_{jacket}}$$

- the height of the strength members is less than the diameter of the central cavity.
- the height of the strength members is between 0.1 and 0.5, preferably between 0.3 and 0.4 times the diameter of the central cavity.

Other characteristics and advantages of the invention will become apparent on reading the following description of embodiments of the invention given by way of example and with reference to the appended drawings which show:

- Figure 1, previously described, is a cross-sectional diagram of a first prior art cable;
- Figure 2, previously described, is a cross-sectional diagram of a second prior art cable;
- Figure 3, is a cross-sectional diagram of a cable according to an embodiment of the invention.

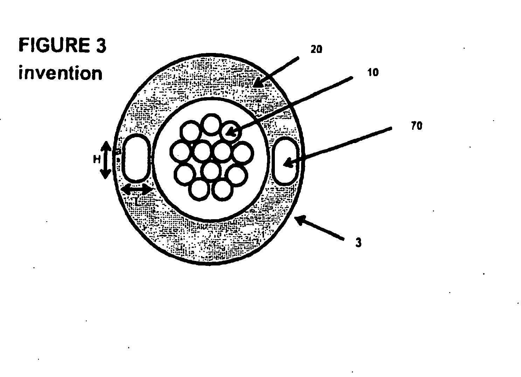

The cable of the invention is described below with reference to Figure 3. The elements common to Figures 1 and 2 have the same reference numbers.

Cable 3 has a longitudinal central cavity to receive micromodules 10 grouping together optical fibres (not shown), and a jacket 20 surrounding this central cavity. The micromodules 10 are loosely provided within the cavity. The jacket 20 may be a polymer, e.g. polyethylene; it has good resistance to humidity and strong mechanical flexibility. The jacket 20 may be extruded to form the cavity in which the micromodules 10 are loosely present. When considering the cable in cross section, the jacket 20 has an inner periphery and an outer periphery defined radially.

The cable 3 of the invention also comprises two strength members 70 of a non-circular shape arranged longitudinally in the jacket 20. These strength members 70 may be glass-reinforced plastic rods, known as GRP (Glass Reinforce Plastic), or steel rods or aramid-reinforced plastic rods, or any other suitable longitudinal strength member to rigidify a telecommunications cable. In particular, the strength members 70 may consist of any material or composite having a high tensile modulus and a high axial compression modulus, of 40000 MPa or more, and a low coefficient of thermal expansion of $5.10^{-5}K^{-1}$ or less. A high axial compression modules is preferable because when going to low temperatures, the strength members shall prevent the cable to contract and buckle, which contracting and buckling would lead to an undesired increase in the attenuation. The polymers making up the cable jacket contract significantly upon lowering the temperature leading to a high axial compression load on the strength members which they need to be able to resist. A low coefficient of thermal expansion is preferable because the strength members are to prevent any negative impact on the transmission characteristics of the optical fibers in the cable in case of changes in the temperature. These strength members are the stable factor in the cable regardless of the temperature.

As illustrated in Figure 3, the strength members 70 of the cable 3 according to the invention are positioned in the jacket 20, distant from both the micromodules 10 so as not to induce stresses on the latter and from the outer periphery of the jacket 20 to avoid being damaged when the cable is pulled. In particular, the strength members 70 are distant from the outer periphery of the jacket 20 by a distance of least 0.3 mm and are distant from the inner periphery of the jacket 20 by a distance of at least 0.3 mm, since this allows for sufficient shielding from induced stresses.

Figure 3 shows the strength members 70 arranged diametrically opposite on either side of the cavity of the micromodules 10. A preferred bending axis of the cable 3 is therefore defined perpendicular to the longitudinal direction of the cable and passing through the two strength members 70. The cable 3 can therefore be inserted in ducts of a telecommunications system and pulled along these ducts being bent whenever necessary along its bending axis. Evidently, depending on applications, another relative arrangement of the strength members 70 may be contemplated. In particular the strength members 70 may be slightly off-axis with respect to a cable diameter, while allowing the defining of a preferred bending axis.

As illustrated in Figure 3, each strength member 70, in its cross-section, has a substantially oval or flattened or elongate shape with a height H perpendicular to the bending axis and a width L parallel to the bending axis which width L is smaller than the height H. The height over width ratio H/L of each strength member 70 is therefore higher than 1 and preferably higher than 1.5 in order to have significant savings in jacket material. This ratio must also be limited to maintain the possibility of bending the cable along its bending axis; therefore this ratio should be limited to a height over width ratio H/L of 1.75, because this will facilitate the bending of the cable around the axis passing through the two strength members, with a target being to bend the cable over 20 times its diameter.

The height of each strength member should preferably be less than the cavity diameter. It is particularly preferred that the height of the strength member is 0.1 to 0.5 times the diameter of the central cavity, more preferable between 0.3 and 0.4 times the diameter of the central cavity. If the height of the central strength member is below 0.1 times the diameter of the central cavity, the strength supplied by the strength member is less than desired. If the ratio is over 0.5, the bending radius of the cable is less than the desired value of twenty times the cable diameter a more optimal compromise is obtained between sufficient strength and sufficient bending for ratio's between 0.3 and 0.4.

A preferred direction of bending must be maintained in the cable 3 to enable its installation. However, if the height H of the strength elements 20 becomes too high, the cable 3 will be difficult to bend since the strength elements 70 - which precisely withstand traction and compression - will extend too far beyond the neutral plane containing the bending axis. If the height of the strength members 70 is too high, and if the cable 3 has to be forced so that it will bend, this could cause the breaking of a strength member and/or tearing of the jacket 20.

More particularly, the shape chosen for the strength members 70 must be such that the height over width ratio H/L lies between 1.5 and 1.75. The cross section area of the strength members 70 is therefore equivalent to that of a round strength member whilst preserving a sufficiently small width to limit the thickness of the jacket 20, and hence the cost and diameter of the cable 3, while maintaining a preferred bending direction of the cable 3. It is conventionally required by equipment manufacturers that a telecommunications cable is able to withstand a bending of at least twenty times its diameter. For example, for GRP strength members 70, manufacturer specifications indicate a bend limit corresponding to a 2 % elongation of the stretched strength member at ambient temperature over a short period of time, and 1% at higher temperatures over a longer period of time. These constraints are used as basis to calculate precise values of width L and height H of the strength members 70 for a given cable 3.

The table I below gives three examples of a cable 3 according to the invention (Ex. 1, Ex. 2, and Ex. 3) as compared with three existing cables 1 (Cables A, B, and C) marketed by the applicant and which are of the cable type schematically illustrated in Figure 1. The five first lines give the dimension parameters of existing cables; the other lines give the dimension parameters of the cable 3 of the invention, and the last line indicates the quantity of jacket material saved in the cables 3 of the invention as compared with known marketed cables 1, 2.

Table I

| Prior art cables | Cable A | Cable B | Cable C |
|---|---|---|---|
| Inner jacket diameter (mm) | 5.9 | 7.3 | 8.5 |
| Outer jacket thickness at strength member (mm)* | 0.5 | 0.5 | 0.5 |
| Diameter of circular strength member (mm) | 1.8 | 2.1 | 2.5 |
| Cross section area of strength member ($CSA_{sm}$) | 2.54 | 3.46 | 4.91 |
| Total cable diameter (mm) | 11.5 | 13.5 | 15.5 |
| | | | |
| Cables of the invention | Ex. 1 | Ex. 2 | Ex. 3 |
| Inner jacket diameter (mm) | 5.9 | 7.3 | 8.5 |
| Outer jacket thickness at strength member (mm)* | 0.5 | 0.5 | 0.5 |
| Width of strength member (mm) | 1.32 | 1.53 | 1.89 |
| Heigth of strength member (mm) | 2.21 | 2.59 | 3.00 |
| Height/Width ratio (H/L) | 1.68 | 1.70 | 1.59 |

(continued)

| Cables of the invention | Ex. 1 | Ex. 2 | Ex. 3 |
|---|---|---|---|
| Cross section area of strength member (CSA$_{sm}$) | 2.54 | 3.46 | 4.90 |
| Total cable diameter (mm) | 10.54 | 12.36 | 14.29 |
| Quantity of jacket material saved (kg/km) | 16.66 | 23.23 | 28.42 |
| * distance between the periphery of the strength member (close to the jacket) and the outer periphery of the jacket along the bending axis of the cable. | | | |

The table clearly shows that the cable 3 of the invention has a reduced total cable diameter for the same size of inner cavity receiving the micromodules 10 of optical fibres, and the cross section of the strength members being the same, whilst maintaining a bend diameter equivalent to twenty times the cable diameter. This results in savings in jacket material, thereby reducing the manufacturing cost of the cable 3.

The cross section area of the strength members 70 according to the invention could even be reduced with respect to the cross section area of the circular strength members 50 illustrated Figure 1, since by reducing the quantity of jacket 20 required to surround the cable 3 this reduces the contraction and expansion forces due to temperature variations; the cost of the strength members 70 would therefore also be reduced.

The cable 3 of the invention has even a higher robustness ratio with a cross section area of the strength members 70 being equivalent to the cross section area of "equivalent" circular strength members 50 (a circular strength member having the same CSA value as the elongated strength member 70 under consideration) for a jacket cross sectional area that is reduced compared with prior art cables 1, 2.

The cross section area of each strength member 70 can be approximated with that of a rectangle bordered by two half-discs, i.e. a rectangle of size L x (H-L) with two half-discs of diameter L placed adjacent either side; the cross section area, CSA, of each strength member can then be expressed as follows:

$$CSA_{sm} = L \, x \, (H - L) + \frac{\pi}{4}(L^2)$$

The cross section area CSA of the jacket 20 can then be expressed as follows:

$$CSA_{jacket} = \frac{\pi}{4}(De^2 - Di^2) - 2CSA_{sm}$$

in which De is the outer diameter of the jacket and Di is the inner diameter of the jacket.

The robustness ratio of the cable 3, defined as the ratio of the cross section area of the strength members 70 over the cross section area of the jacket 20, may lie between 8 and 15 for a jacket thickness of between 18 and 25 % of the cable diameter.

The relation between the robustness ratio and the jacket thickness/cable diameter ratio is not universal however, and differs according to the type of strength member 70 used (steel or GRP), the distance of the strength members 70 from the outer periphery of the jacket 20, and the diameter of an equivalent circular strength member 50. The robustness values given above are representative of cables 3 having diameters ranging from 7-8 mm to more than 15 mm with GRP members positioned at a distance of 0.3 to 0.8 mm from the outer periphery of the jacket 20, and of "usual" equivalent circular strength members 50.

The robustness ratio must not be too high if it is wished to obtain a stable structure at low temperatures. This is facilitated through the use of strength members having a cross section of elongate shape, since the jacket cross section is proportionally lower. It is also of interest to note that the robustness ratio is improved by 23 to 25% in the three examples given in the above table.

## Claims

1.  An optical fiber telecommunication cable (3) comprising :

- a longitudinal central cavity receiving micromodules (10) grouping optical fibers together;
- a jacket (20) surrounding the central cavity;
- two strength members (70) arranged longitudinally In the jacket (20) and defining a bending axis of the cable (3), which bending axis passes through the two strength members (70), each strength member (70) having an elongated shape in its cross section with a height (H) perpendicular to the bending axis and a width (L) parallel to the bending axis, **characterized in that** the height over width ratio (H/L) of each strength member being more than 1 and no more then 1.75.

2.  The telecommunication cable (3) according to claim 1, wherein the height over width ratio (H/L) of each strength member (70) is comprised between 1.5 and 1.75.

3.  The telecommunication cable (3) according to claim 1 or 2, wherein each strength member (70) is distant from the outer periphery of the jacket (20) and from the inner periphery of the jacket (20) by a distance of at least 0.3 mm.

4.  The telecommunication cable (3) according to any one of claims 1-3, wherein the strength members (70) are made from material or composite having an axial compression modulus superior or equal to 40 000 Mpa.

5.  The telecommunication cable (3) according to any one of claims 1-4, wherein the strength members (70) are made from material or composite having a thermal expansion coefficient inferior or equal to $5.10^{-5}$ $K^{-1}$.

6.  The telecommunication cable (3) according to any one of claims 1-5, wherein the height (H) of the strength members (70) Is less than the diameter of the central cavity.

7.  The telecommunication cable (3) according to claim 6, wherein the height (H) of the strength members (70) is between 0.1 and 0.5, preferably between 0.3 and 0.4 times the diameter of the central cavity.

**Patentansprüche**

1.  Lichtwellenleiter-Telekommunikationskabel (3) mit:

    - einem längs verlaufenden Mittelhohlraum, in dem Mikromodule (10) aufgenommen sind, in denen Lichtwellenleiter in Gruppen zusammengefasst sind,
    - einem Mantel (20), der den Mittelhohlraum umgibt,
    - zwei im Mantel (20) längs angeordneten Zugentlastungselementen (70), die eine Biegeachse des Kabels (3) definieren, wobei die Biegeachse durch die beiden Zugentlastungselemente (70) verläuft, wobei jedes Zugentlastungselement (70) im Querschnitt eine längliche Form mit einer zur Biegeachse senkrechten Höhe (H) und einer zur Biegeachse parallelen Breite (L) hat, **dadurch gekennzeichnet, dass** das Verhältnis von Höhe zu Breite (H/L) jedes Zugentlastungselements größer als 1 ist und höchstens 1,75 beträgt.

2.  Telekommunikationskabel (3) nach Anspruch 1, bei dem das Verhältnis von Höhe zu Breite (H/L) jedes Zugentlastungselements (70) zwischen 1,5 und 1,75 liegt.

3.  Telekommunikationskabel (3) nach Anspruch 1 oder 2, bei dem jedes Zugentlastungselement (70) mit einem Abstand von mindestens 0,3 mm vom Außenumfang des Mantels (20) und vom Innenumfang des Mantels (20) beabstandet ist.

4.  Telekommunikationskabel (3) nach einem der Ansprüche 1 - 3, bei dem die Zugentlastungselemente (70) aus Material oder Verbundmaterial mit einem Kompressionsmodul in axialer Richtung bestehen, der größer oder gleich 40.000 Mpa ist.

5.  Telekommunikationskabel (3) nach einem der Ansprüche 1 - 4, bei dem die Zugentlastungselemente (70) aus Material oder Verbundmaterial mit einem Wärmeausdehnungskoeffizienten kleiner oder gleich $5 - 10^{-5}$ $K^{-1}$ bestehen.

6.  Telekommunikationskabel (3) nach einem der Ansprüche 1 - 5, bei dem die Höhe (H) der Zugentlastungselemente (70) kleiner als der Durchmesser des Mittelhohlraums ist.

7.  Telekommunikationskabel (3) nach Anspruch 6, bei dem die Höhe (H) der Zugentlastungselemente (70) zwischen dem 0,1- und dem 0,5-fachen, vorzugsweise zwischen dem 0,3- und dem 0,4-flachen des Durchmessers des Mittelhohlraums liegt.

**Revendications**

1. Câble de télécommunications à fibre optique (3) comprenant :

   - une cavité centrale longitudinale recevant des micromodules (10) regroupant des fibres optiques ;
   - une chemise (20) entourant la cavité centrale ;
   - deux organes de renfort (70) agencés longitudinalement dans la chemise (20) et définissant un axe de courbure du câble (3), l'axe de courbure passant à travers les deux organes de renfort (70), chaque organe de renfort (70) ayant une forme allongée en coupe avec une hauteur (H) perpendiculaire à l'axe de courbure et une largeur (L) parallèle à l'axe de courbure, **caractérisé en ce que** le rapport entre hauteur et largeur (H/L) de chaque organe de renfort est supérieur à 1 et non supérieur à 1,75.

2. Câble de télécommunications (3) selon la revendication 1, dans lequel le rapport entre hauteur et largeur (H/L) de chaque organe de renfort (70) est compris entre 1,5 et 1,75.

3. Câble de télécommunications (3) selon la revendication 1 ou 2, dans lequel chaque organe de renfort (70) est distant de la périphérie externe de la chemise (20) et de la périphérie interne de la chemise (20) d'au moins 0,3 mm.

4. Câble de télécommunications (3) selon l'une quelconque des revendications 1 à 3, dans lequel les organes de renfort (70) sont constitués d'un matériau ou d'un composite ayant un module de compression axiale supérieur ou égal à 40 000 Mpa.

5. Câble de télécommunications (3) selon l'une quelconque des revendications 1 à 4, dans lequel les organes de renfort (70) sont constitués d'un matériau ou d'un composite ayant un coefficient de dilatation thermique inférieur ou égal à $5.10^{-5}$ $K^{-1}$.

6. Câble de télécommunications (3) selon l'une quelconque des revendications 1 à 5, dans lequel la hauteur (H) des organes de renfort (70) est inférieure au diamètre de la cavité centrale.

7. Câble de télécommunications (3) selon la revendication 6, dans lequel la hauteur (H) des organes de renfort (70) est comprise entre 0,1 et 0,5, de préférence entre 0,3 et 0,4 fois le diamètre de la cavité centrale.

## FIGURE 1
## PRIOR ART

## FIGURE 2

## PRIOR ART

FIGURE 3
invention

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- FR 2665266 A
- FR 2706218 A
- WO 2006034722 A
- WO 2006034723 A
- US 5050957 A
- US 5109457 A
- US 4844575 A
- WO 9201962 A
- EP 0968809 A
- US 20040114889 A